# EUROPÄISCHE PATENTSCHRIFT

(11) **EP 0 297 210 B1**
(45) Veröffentlichungstag und Bekanntmachung des Hinweises auf die Patenterteilung: **25.08.1993**
(21) Anmeldenummer: 88103968.9
(22) Anmeldetag: 12.03.1988
(51) Int. Cl.: A01B 63/112

(54) **Messglied zum Messen einer an einem Zuggerät angreifenden Kraft**
Measuring part for measuring the draft force applied to a tractor
Instrument de mesure pour mesurer l'effort de traction appliqué à un tracteur

(30) Priorität: 03.07.1987 DE 3722041
(43) Veröffentlichungstag der Anmeldung: 04.01.1989
(73) Patentinhaber: DEERE & COMPANY, Moline, Illinois 61265 (US)
(72) Erfinder: Becker, Manfred, D-6710 Frankental (DE); Ortlepp, Hilmar, D-6800 Mannheim 31 (DE); Stuhrmann, Heinz, Dr.-Ing.,, D-6800 Mannheim (DE)
(74) Vertreter: Feldmann, Bernhard

(56) Entgegenhaltungen:
- WO-A-81/00035
- WO-A-85/01346
- DE-A- 3 343 895
- DE-A- 3 434 131
- DE-A- 3 515 126
- GB-A- 2 094 984

## Beschreibung

Die Erfindung betrifft eine Meßvorrichtung zum Messen einer von einem Koppelglied auf ein Zuggerät übertragenen Kraft
mit einem Körper, der
a) einenends mit dem Koppelglied verbunden,
b) anderenends ortsfest angebracht,
c) in Abhängigkeit von der Größe der Kraft elastisch deformierbar, und
   mit einem Geberglied, das
d) im Bereich der Angriffsfläche des Koppelglieds mit dem Körper verbunden ist und
e) sich im übrigen berührungslos innerhalb des Körpers erstreckt,

mit einem Nehmerglied, und mit einem Regelkreis zum Ändern der Größe der Kraft.

Meßglieder zum Messen einer an einem Zuggerät angreifenden Kraft finden insbesondere Anwendung bei Ackerschleppern, die im Einsatz ein Bodenbearbeitungsgerät über das Feld ziehen, um beim Auftreten von Zugwiderstandsänderungen eine Überlastung oder ein Abwürgen des Ackerschleppers, also des Zuggerätes, zu vermeiden und eine Bedienungsperson zu entlasten.

Die DE-A1-34 34 131 offenbart einen Kraftmesser, der sowohl ein- wie auch beidseitig eingespannt werden kann und in einem Hohlraum einen einenends fest eingeklemmten Zeiger enthält. Der Zeiger ragt aus dem Hohlraum nach außen zu einem nicht beschriebenen Meßwertaufnehmer.

Aus der GB-A-2 094 984 geht ein Kraftmeßverfahren und eine Kraftmeßvorrichtung zur Steuerung des Krafthebers eines Ackerschleppers hervor, wobei nach deren Figur 7 ein Biegestab einenends fest eingespannt und anderenends in jeder Richtung entsprechend einer an ihm angreifenden Kraft beweglich ist. Ein nahe des freien Endes des Biegestabs angeordneter Hall-Sensor gibt aufgrund der relativer Bewegung zu dem Biegestab ein Signal an einen Regelkreis, der eine Änderung der angreifenden Kraft bewirkt.

Diese Kraftmeßvorrichtungen sind nachteilig, weil der Meßwertaufnehmer bzw. der Hall-Sensor an einem Ort äußerst ungünstiger Bedingungen vorgesehen werden muß, wenn sie auf die Bewegung des freien Endes des Zeigers bzw. des Biegestabs ansprechen soll, denn diese Angriffsstelle des Koppelgliedes wird ständig von Schmutz, Wasser und Gegenständen beaufschlagt, die die Funktion des Meßwertaufnehmers bzw. des Hall-Sensors beeinträchtigen können. Zudem führt jede Verformung des Biegestabs zu einem Signal, ungeachtet der Richtung der zugrundeliegenden Kraft.

Ein Meßglied gemäß der DE-OS-35 15 126 ist als zylindrischer innenhohler Bolzen ausgeführt, in dessen Innern ein Meßstab einenends fest und anderenends beweglich eingespannt ist. Die infolge einer Krafteinleitung auftretende Auslenkung des Meßstabs wird mittels eines elektromagnetischen Sensors erfaßt. Die Form und die Anordnung des Meßglieds lassen eine Verformung in alle Richtungen zu.

Schließlich ist aus der DE-OS-33 43 895 ein Meßglied bekannt, das eine Hülse und ein in die Hülse eingeklebtes Geberglied enthält. Das Geberglied ist mit Dehnungsmeßstreifen versehen, und aus Widerstandsänderungen, die infolge von am Meßglied angreifenden Kräften entstehen, werden Signale gebildet, die einem Regelkreis zugeführt werden, um das Bodenbearbeitungsgerät derart zu verstellen, daß sich sein Zugwiderstand in einem bestimmten Sinn ändert.

Dieses Meßglied und das damit einhergehende Verfahren sind insofern nachteilig, als die Klebeverbindung zwischen dem Geberglied und der Hülse absolut sicher und zuverlässig sein muß, was sich jedoch nur schwer und mit hohem Kostenaufwand realisieren läßt. Das gleiche gilt für die Befestigung der Dehnungsmeßstreifen auf dem Geberglied.

Die der Erfindung zugrundeliegende Aufgabe wird darin gesehen, eine Meßvorrichtung zu schaffen, so daß an einem Zuggerät angreifende und z. B. von einem Bodenbearbeitungsgerät herrührende Zugwiderstandskräfte auf einfache, kostengünstige und zuverlässige Weise gemessen und anschließend geregelt werden können, wobei das Nehmer- und das Geberglied geschützt angeordnet sein sollen und nicht alle Kräfte sogleich zu einem Regelsignal führen.

Diese Aufgabe ist erfindungsgemäß durch die Lehre des Patentanspruchs 1 gelöst worden, wobei diese Lehre gemäß den nachgeordneten Patentansprüchen weiterentwickelt worden ist.

Beachtliche kostenmäßige Vorteile ergeben sich aus der Verwendung eines als Hall-Sensor ausgebildeten Nehmergliedes, da derartige Sensoren bereits Massengüter darstellen, die zu günstigen Preisen und in einer Vielzahl von Ausführungsformen verfügbar sind. Hall-Sensoren sind schaltungstechnisch und einbaumäßig sehr leicht zu handhaben. Das Geberglied braucht nur an einem Endbereich befestigt zu werden, während es an seinem anderen Endbereich frei ist. Die einseitige Einspannung kann stoff-, reib- und formschlüssig erfolgen. Da an dem Geberglied keine Zugspannungen anliegen, kann die Stoffschlüssigkeit sogar mittels eines Klebers erreicht werden. Insbesondere erlaubt die einseitige Einspannung des Gebergliedes dessen Montage auch noch, wenn nur eine Seite des Körpers von außen her zugänglich ist. Ein aus dem Körper, einem Geber- und einem Nehmerglied bestehendes Meßglied kann auch als komplette Einheit vorgefertigt und geprüft werden und dann in oder an den betreffenden Verwendungsgegenstand montiert werden. Die geometrische Gestaltung des Körpers des Meßgliedes sorgt schließlich dafür, daß bestimmte und für den Regelvorgang entweder unerwünschte oder untergeordnete Kräfte keine oder nur eine sehr geringe Verformung des Körpers und somit des Gebergliedes bewirken und somit vor dem Regelvorgang ausgefiltert werden.

Die Meßvorrichtung mit ihrem Körper und seinem Geber- und Nehmerglied kann als vielseitig verwendbare Einheit so gestaltet werden, daß sie zur Aufnahme jeder Art von Koppelgliedern geeignet ist. Es ist mit einer Ausführung eines Körpers möglich, sowohl die auf einen Oberlenker, wie auch die auf einen Unterlenker einer Dreipunktgerätekupplung insbesondere eines Ackerschleppers aufgebrachten Kräfte zu erfassen.

Die Anbringung eines Aufnahmeteils an dem Körper, auf dem das Koppelglied schwenkbeweglich gelagert ist, hat den Vorteil, daß sich das Koppelglied stets radial zu der Mittenachse des Meßglieds und nach der Kraftangriffsrichtung ausrichten kann.

In der Beschreibung ist nachfolgend ein Verfahren zum Regeln einer an einem Zuggerät angreifenden Kraft sowie ein Ausführungsbeispiel eines erfindungsgemäßen Meßgliedes näher beschrieben, wobei das Meßglied in einer Zeichnung dargestellt ist. Es zeigen:
- Fig. 1: ein Zuggerät mit einem Meßglied,
- Fig. 2: einen Körper des Meßgliedes in perspektivischer Darstellung,
- Fig. 3: zwei in eine Gehäusewand eingesetzte Meßglieder gemäß Fig. 2 mit jeweils einem Geberglied im Schnitt,
- Fig. 4: zwei in eine Gehäusewand eingesetzte Meßglieder gemäß Fig. 2 mit einem gemeinsamen Geberglied im Schnitt,
- Fig. 5: zwei in eine Gehäusewand eingesetzte Meßglieder gemäß Fig. 2 mit zwei miteinander verbundenen Gebergliedern im Schnitt und
- Fig. 6: ein Meßglied, zur Verbindung mit einem als Oberlenker ausgebildeten Koppelglied.

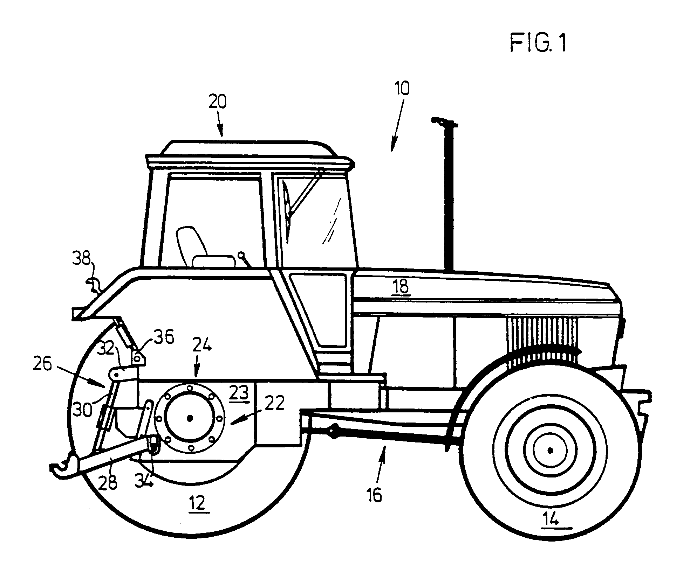

Ein in Fig. 1 gezeichnetes Zuggerät 10 in der Form eines Ackerschleppers trägt auf einem auf rückwärtigen und vorderen Rädern 12 und 14 abgestützten Chassis 16 im wesentlichen einen Motorteil 18 und eine Kabine 20. Rückwärtig des Motorteils 18 und unterhalb der Kabine 20 schließt ein Gehäuse 22 für ein Getriebe an, das wiederum Achstrichter 24 trägt, in denen die rückwärtigen Räder 12 drehbar gelagert sind. An das von Gehäusewänden 23 umgebene Gehäuse 22 ist eine Gerätekupplung 26 für einen Dreipunktanbau montiert. Diese besteht unter anderem aus Koppelgliedern 28 in der Form von unteren Lenkern, jeweils einer diesen zugeordneten Hubstrebe 30 und jeweils einem Hubarm 32, der auf einer ebenfalls nicht gezeichneten Hubwelle befestigt ist, wobei die Hubstreben 30 gelenkig mit den Koppelgliedern 28 und den Hubarmen 32 verbunden sind. Jedes Koppelglied 28 greift an einem erfindungsgemäßen Meßglied 34 an, das in oder an dem Gehäuse 22 in dessen rückwärtigen unteren Bereich quer zur Fahrtrichtung befestigt ist. Die Gerätekupplung 26 ist spiegelbildlich zur vertikalen Längsmittelebene des Zuggerätes 10 angeordnet, weshalb sich die Beschreibung nur mit der in Vorwärtsfahrtrichtung rechts der vertikalen Längsmittelebene gelegenen Seite befaßt; für die links gelegene Seite gilt die Beschreibung analog.

In dem Bereich der Hubwelle, also im oberen rückwärtigen Bereich des Gehäuses 22, ist eine Halterung 36 für einen ebenfalls als Koppelglied dienenden oberen Lenker 38 vorgesehen, der an einen Turm eines nicht dargestellten anzubauenden Gerätes ankuppelbar ist. Die Halterung 36 ist starr angebaut, und da die Koppelglieder 28 auf die Meßglieder 34, von denen der Regelungsvorgang ausgeht, aufgesetzt sind, handelt es sich hierbei um eine sogenannte Unterlenkerregelung.

Bei einer Unterlenkerregelung werden die Meßglieder 34 endseitig von Zugkräften beansprucht, die sich aus dem Arbeitswiderstand des angebauten oder angehängten Gerätes ergeben und die von den einenends an dem Gerät und anderenends an den Meßgliedern 34 angreifenden Koppelgliedern 28 übertragen werden. Der obere Lenker 38 dient dabei als Gegenhalter, um ungewollte heckseitige Höhenbewegungen des Gerätes zu vermeiden. Diese Zugkräfte wirken als Biegekräfte um die Außenkante der Gehäusewand 23 des Gehäuses 22 und führen dazu, daß sich jedes Meßglied 34 mehr oder weniger krümmt, wobei sein Ausschlag im direkten Verhältnis zur vom Koppelglied 28 übertragenen Kraft steht. Die Meßglieder 34 sind in dem Gehäuse 22 an einen nicht gezeigten Regelkreis mit einem Ventil angeschlossen, über welches ein Hydraulikzylinder zum Auf- und Abbewegen der Koppelglieder 28 um die Meßglieder 34 mit Druckflüssigkeit beaufschlagt wird. Die Regelung ist dabei so getroffen, daß bei größer werdendem Zugwiderstand das angekuppelte Gerät angehoben, und daß es bei kleiner werdendem Zugwiderstand abgesenkt wird.

Die Anwendung in diesem Ausführungsbeispiel bei einem Akkerschlepper ist nur eine unter vielen Anwendungsmöglichkeiten. Denn ein derartiges Meßglied 34 kann überall dort eingebaut werden, wo Kräfte ein Biegemoment erzeugen, das zur Bildung eines Regelsignals verwendet wird, so z. B. in Hebezeugen, in Baumaschinen, in Werkzeugmaschinen und Spannverbindungen.

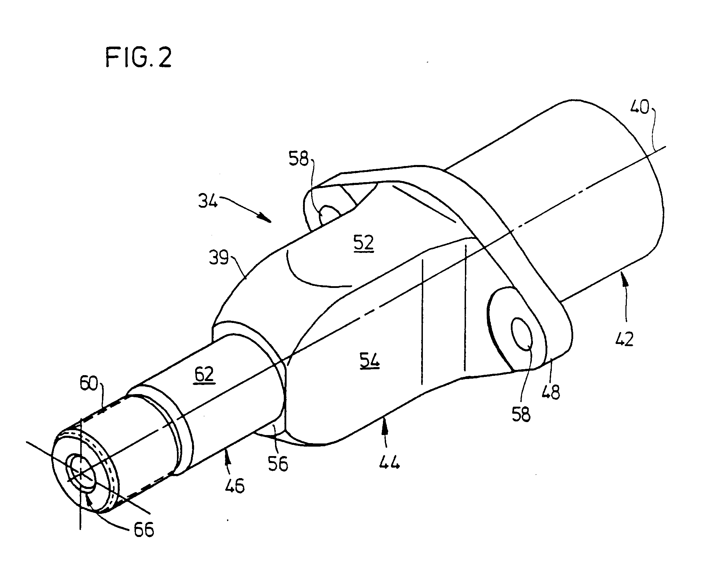

Das in Figur 2 wiedergegebene Meßglied 34 erstreckt sich zylindrisch zu einer Mittenachse 40 und weist einen Körper 39 mit drei Abschnitten auf, und zwar einen Paßteil 42, einen Biegeteil 44 und einen Aufnahmeteil 46, die gemeinsam einen einzigen Teil aus hochwertigem Stahl bilden.

Der Paßteil 42 ist rund zylindrisch ausgebildet, setzt sich gegenüber dem Biegeteil 44 mit einem Flansch 48 ab und wird in eine in den nachfolgenden Figuren wiedergegebene Bohrung 50 in der Gehäusewand 23 eingesetzt.

Der Biegeteil 44 ist im wesentlichen als kantiger Zylinder ausgebildet, hat also ein Vierkantprofil und weist eine schmale Seite 52 und eine breite Seite 54 auf, denen jeweils eine gleich große Seite gegenüberliegt. Die Seiten 52, 54 enden einenends in dem Flansch 48 und anderenends in einer Schulter 56, wobei die Außenabmessungen des Flansches 48 weitaus größer sind, als die der Schulter 56. Durch den Flansch 48 erstrecken sich mehrere Löcher 58, durch die sich nicht gezeigte Schrauben zur Befestigung des Meßgliedes 34 an der Gehäusewand 23 erstrecken.

Der Aufnahmeteil 46 setzt sich aus einem Gewindeabschnitt 60 und einem gewindelosen Abschnitt 62 zusammen, der sich zwischen dem Gewindeabschnitt 60 und der Schulter 56 erstreckt. Wie aus den nachfolgenden Figuren hervorgeht, sind die Koppelglieder 28 auf den gewindelosen Abschnitt 62 aufgesetzt und mittels einer auf den Gewindeabschnitt aufgeschraubten Mutter 64 gehalten. Allerdings können anstatt des Gewindeabschnitts 60 und der Mutter 64 auch ein weiterer gewindeloser Abschnitt und eine mit einem Stift befestigte Hülse vorgesehen werden.

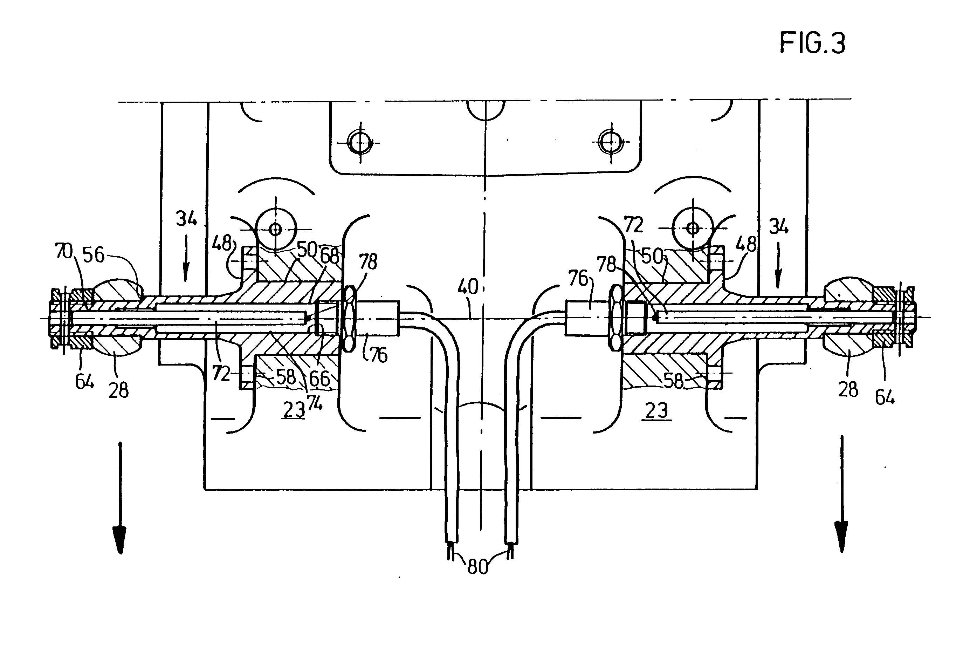

In den weiteren Figuren 3 bis 5 ist jeweils eine Ansicht auf die Unterseite des Gehäuses 22 im Schnitt gezeigt, wobei in jede seitliche Gehäusewand 23 ein Meßglied 34 eingesetzt ist, und zwar so, daß deren Mittenachsen 40 miteinander fluchten. Abweichend hiervon können sich von dem Gehäuse 22 des Getriebes oder von irgendeinem anderen Gehäuse Vorsprünge erstrecken, in die die Bohrungen 50 eingearbeitet sind. In einer weiteren sehr vorteilhaften Bauweise können die Meßglieder 34 auch in eine separate Platte oder Konsole eingesetzt werden, die an eine Maschine, ein Getriebegehäuse eines Ackerschleppers, einen Kran oder dergleichen angeschraubt wird. Wie zuvor beschrieben wurde, ist auf den Gewindeabschnitt 60 des Meßgliedes 34 eine Mutter 64 aufgeschraubt, so daß das Koppelglied 28 in Richtung der Mittenachse 40 zwischen der Mutter 64 und der Schulter 56 gehalten wird; jedoch kann das Koppelglied 28 durch eine nicht dargestellte Kugelösenaufhängung begrenzt um den Befestigungspunkt auf dem Meßglied 34 schwenken.

Man erkennt ferner, daß der Flansch 48 mit seiner einen Seite an der Gehäusewand 23 anliegt und der Paßteil 42 in die Bohrung 50 spielfrei eingesetzt ist. Nachdem die Schrauben in die Gehäusewand 23 fest eingeschraubt sind, ist das Meßglied 34 unbeweglich an dem Gehäuse 22 festgelegt.

Von Bedeutung ist, daß das Meßglied 34 derart in die Gehäusewand 23 eingesetzt ist, daß sich die Seite 52 mit der kürzeren Seitenlänge in der Richtung des Pfeiles in Figur 3 und die Seite 54 mit der größeren Seitenlänge senkrecht zu der Richtung des Pfeiles erstreckt. Dies hat zur Folge, daß das Meßglied 34 in der Richtung des Pfeiles und somit der hauptsächlich angreifenden Kraft sensibler ist als insbesondere in der senkrecht dazu verlaufenden Richtung, so daß nicht zu berücksichtigende Kräfte nur geringfügig oder gar keinen Einfluß auf die Signalgebung ausüben.

Aus der Schnittdarstellung ist zu entnehmen, daß sich in der Richtung der Mittenachse 40 eine Bohrung 66 über die gesamte Länge des Meßgliedes 34 erstreckt, die in einem sich über den Paßteil 42 und den Biegeteil 44 erstreckenden Abschnitt 68 einen größeren Durchmesser aufweist, als in einem sich über den Aufnahmeteil 46 erstreckenden Abschnitt 70. Die Bohrung 66 kann zur Anpassung an das Durchbiegeverhalten abgestuft ausgeführt sein.

Bei dem Ausführungsbeispiel gemäß Figur 3 ist ein Geberglied 72 in der Art eines kleinen Stabes in den Abschnitt 70 eingesetzt und dort durch eine Preßpassung, durch Löten, durch Schrauben oder durch Kleben axial und tangential unbeweglich gehalten. Als Material kann sowohl nicht magnetischer wie auch magnetischer Stahl, z. B. kaltgezogener weichmagnetischer Stahl, oder auch ein Kunststoff herangezogen werden. Das Geberglied 72 ist sehr formstabil und erstreckt sich von dem äußeren Ende des Aufnahmeteils 46 bis fast zum äußeren Ende des Paßteils 42. Sobald es den Abschnitt 70 mit dem kleineren Durchmesser der Bohrung 66 verläßt, bildet sich ein Ringspalt 74 zwischen seiner Mantelfläche und der Innenwandung der Bohrung 66, d. h. das Geberglied 72 ist in diesem Abschnitt 68 radial beweglich.

An dem äußeren Ende des Paßteils 42 ist in den Austrittsbereich der Bohrung 66, also in den Abschnitt 68 ein Nehmerglied 76 eingesetzt, das in diesem Ausführungsbeispiel von einem bekannten, herkömmlichen Hall-Sensor gebildet wird. Das Nehmerglied 76 kann in den Abschnitt 68 der Bohrung 66 sowohl eingeschraubt, eingeklebt als auch eingeklipst werden. Zur Erzeugung eines Signals in dem Nehmerglied 76 ist auf die Endfläche des Gebergliedes 72 ein sehr kleiner und als Permanentmagnet ausgebildeter Magnet 78 aufgeklebt oder sonstwie befestigt, der ein Magnetfeld bildet. Von jedem Nehmerglied 76 führt ein Kabel 80 zu einem nicht gezeichneten Regelkreis.

Wenn auf das Meßglied 34 eine Kraft in der Richtung der Pfeile in Figur 3 wirkt, lenkt der Aufnahmeteil 46 aus und der Biegeteil 44 verbiegt sich. Über den Aufnahmeteil 46 wird das Geberglied 72 mitbewegt, das dann um das theoretische Biegezentrum schwenkt, so daß sich die relative Stellung des Magneten 78 zu dem Nehmerglied 76 verändert. Die Veränderung dieser relativen Stellung bildet in dem Nehmerglied 76 ein Signal, das an den nicht in der Zeichnung enthaltenen Regelkreis weitergegeben wird, um ein Regelsignal für das Ventil zum Verstellen des Hydraulikzylinders zu erzeugen.

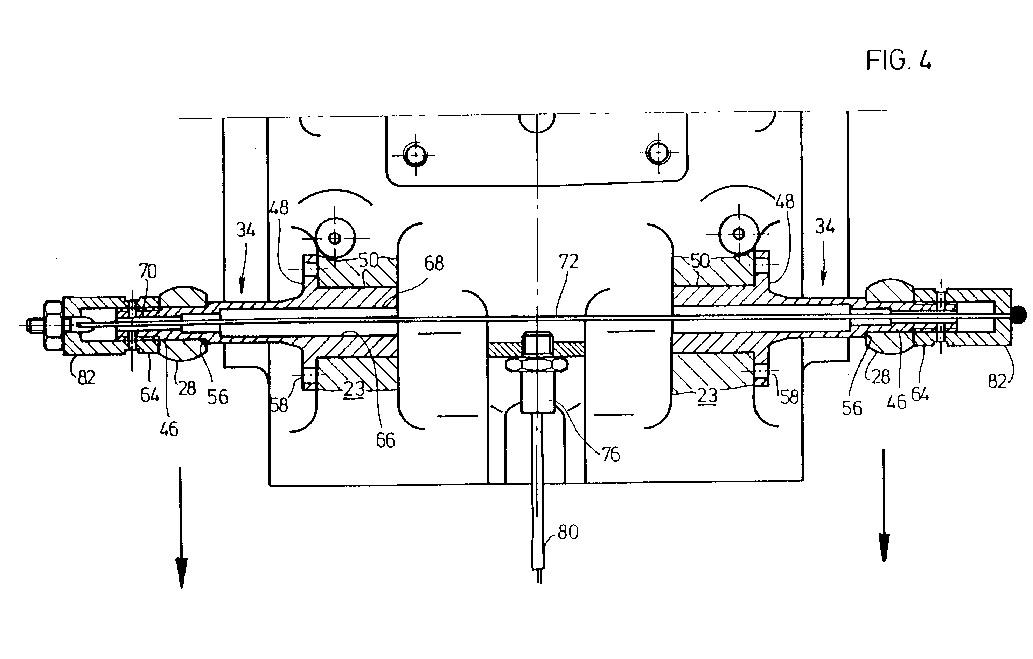

Das in Figur 4 gezeigte Ausführungsbeispiel weist als einen Unterschied zu dem in Figur 3 gezeigten auf, daß das Geberglied 72 als eine Saite ausgebildet ist, die zwischen den Aufnahmeteilen 46 der beiden Meßglieder 34 gespannt ist. Hierzu ist auf die äußere Stirnseite des Aufnahmeteils 46, oder auf die der Mutter 64 eine Spannvorrichtung 82 aufgesetzt bzw. mit dieser verbunden ist, mittels der die Spannung und somit die Frequenz des als Saite ausgebildeten Gebergliedes 72 eingestellt werden kann. Zur Erreichung einer optimalen Signalgebung kann somit das Geberglied 72 auch auf seine Eigenfrequenz gespannt werden.

Greift an den Meßgliedern 34 eine Kraft in der Richtung der Pfeile an, dann bewegen sich die Aufnahme- und Biegeteile 46 und 44 ebenfalls in der Richtung der Pfeile und bewirken dadurch, daß sich die Lage des Gebergliedes 72 ändert. Gleichsam mit dieser Lageänderung ändert sich auch die Spannung des Gebergliedes 72 und dessen Frequenz.

Ein zweiter Unterschied ist darin zu sehen, daß nur ein Nehmerglied 76 vorgesehen und so angeordnet ist, daß es stets die größte Auslenkung des Geberglieds 72 erfassen kann. Es ist also auf der halben Länge des Gebergliedes 72 angeordnet. Das Nehmerglied 76 kann als Hall-Sensor, als Frequenzmesser, oder Induktionsmesser oder als irgendein technisch bekannter berührungsloser Wegaufnehmer ausgeführt sein und ist ebenfalls über ein Kabel 80 an den Regelkreis angeschlossen.

Ist das Nehmerglied 76 als Hall-Sensor ausgebildet, dann befindet sich auf dem Geberglied 72 wiederum ein Magnet 78, der ein Magnetfeld aufbaut, dessen Änderung in dem Hall-Sensor ein Signal hervorruft.

Ist das Nehmerglied 76 als Frequenzmesser ausgebildet, dann ist zusätzlich ein nicht gezeigter Erregerkreis für das Geberglied 72, also die Saite, vorgesehen, der an diesem eine Schwingung aufbaut, die, solange keine Kraft auf die Meßglieder 34 einwirkt, der Eigenfrequenz des Gebergliedes 72 entspricht. Hierzu könnten Erregermagneten in der Bohrung 66 vorgesehen sein.

Ist das Nehmerglied 76 als Induktionsmesser ausgebildet, dann baut es selbst ein Magnetfeld auf, in dem sich das Geberglied 72 bewegen kann.

Ändert sich infolge einer an den Meßgliedern 34 angreifenden Kraft die Lage oder die Spannung des Gebergliedes 72, dann wird dies von dem Nehmerglied 76 erfaßt und über das Kabel 80 dem Regelkreis gemeldet, der wiederum ein Signal an das Ventil zum Verstellen des Hydraulikzylinders abgibt.

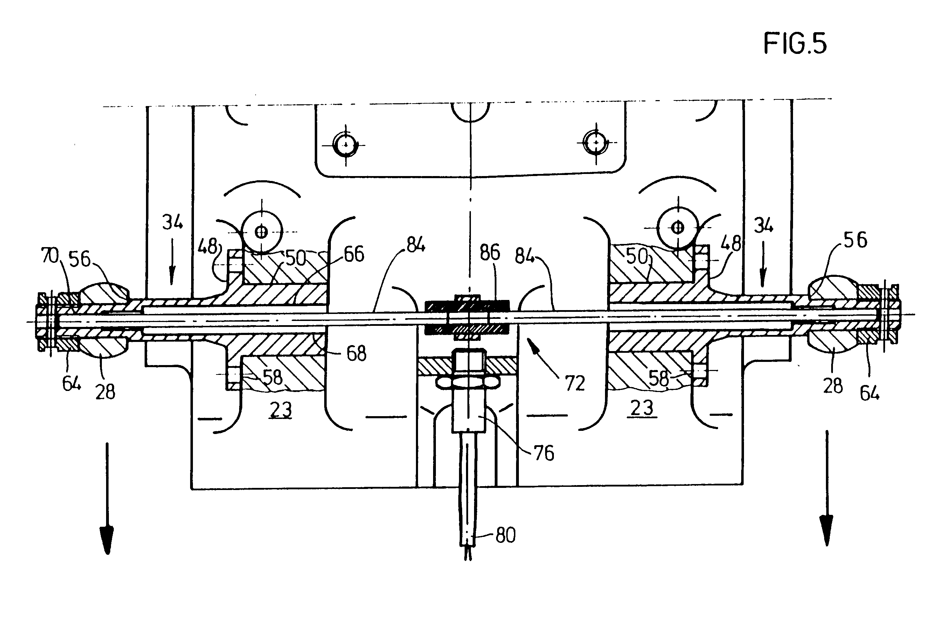

In Figur 5 ist ein Ausführungsbeispiel dargestellt, das dem in Figur 4 gezeigten weitgehend entspricht. Allerdings ist anstatt der Ausbildung des Gebergliedes 72 als Saite eine Version ähnlich des in Figur 3 gezeigten Ausführungsbeispiels gezeigt. Das Geberglied 72 wird namlich von zwei Stäben 84 gebildet, deren Längsmittenachsen im unbelasteten Zustand der Meßglieder 34 miteinander fluchten. Die Länge der Stäbe 84 ist so gewählt, daß sie sich endseitig beinahe berühren. Eine Verbindung beider Stäbe 84 miteinander erfolgt dann über eine Koppelhülse 86.

Das Nehmerglied 76 kann dann ebenfalls wieder als Hall-Sensor oder als Induktionsmesser ausgebildet sein, wobei im Falle des Hall-Sensors der Magnet auf der Koppelhülse 86 angebracht wird.

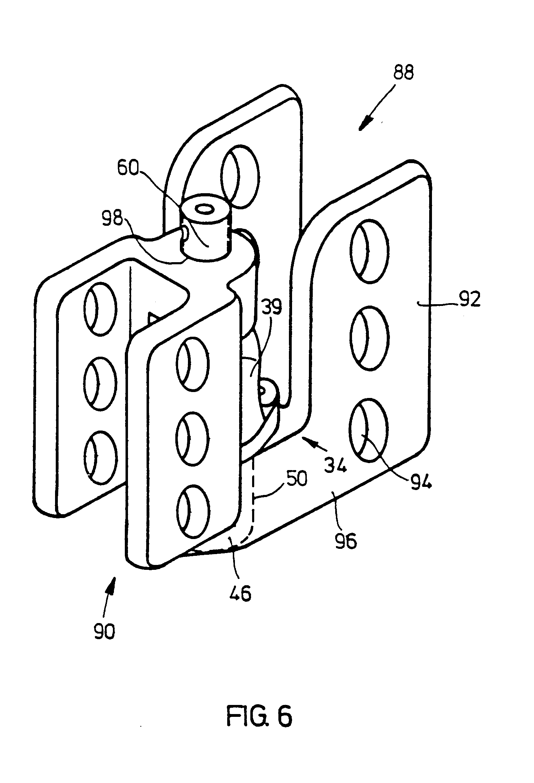

Figur 6 gibt die Anordnung des erfindungsgemäßen Meßglieds 34 wieder, wie sie getroffen ist, wenn im Gegensatz zu dem eingangs Beschriebenen von einer Oberlenkerregelung ausgegangen wird, die im Prinzip genauso wirkt; allerdings stellen sich die aufzunehmenden Kräfte dann als Druckkräfte, anstatt von Zugkräften, dar, die sich bekannterweise daraus ergeben, daß ein an einen Ackerschlepper angebautes Gerät um die Verbindungspunkte an den als Unterlenker ausgebildeten Koppelgliedern 28 schwenkt. Der Körper 39 entspricht dem in den vorherigen Figuren gezeigten, und als Nehmer-bzw. Geberglied 76 bzw. 72 kommen insbesondere die in den Figuren 3 und 5 gezeigten in Betracht; insofern wird auf die vorherige Beschreibung und Darstellung verwiesen. Bei der Anwendung des Geberglieds 72 aus Figur 5 genügt allerdings ein Stab 84, während der zweite Stab 84 und die Koppelhülse 86 entfallen. Es ist allerdings auch denkbar, den zweiten Stab 84 als eine bloße Verbindung zu einem ortsfesten Teil ohne Regelfunktion auszugestalten, der unter Beibehaltung der Koppelhülse 86 ein unerwünschtes Vibrieren des ersten Stabs 84 im Betrieb des Zuggeräts 10 unterbindet.

Man erkennt in Figur 6, daß der Körper 39 einenends mit einem Träger 88 und anderenends mit einem Halter 90 verbunden ist.

Der Träger 88 ist L-förmig gestaltet und weist in einem aufgehenden, zweigeteilten Schenkel 92 mehrere Bohrungen 94 auf, die der Aufnahme nicht gezeigter Bolzen oder dergleichen dienen. Mittels dieser Bolzen kann der Träger 88 an einer an dem Zuggerät 10 angebauten, nicht gezeigten Lochschiene befestigt werden. Der andere, waagrechte Schenkel 96 enthält die Bohrung 50 zur Aufnahme des Paßteils 42, deren Längsmittenachsen sich im zusammengefügten Zustand vertikal erstrecken. Es sind dann in herkömmlicher Weise wieder nicht gezeigte Schrauben vorgesehen, die durch die Löcher 58 des Körpers 39 gesteckt und in entsprechende Gewindebohrungen in dem waagrechten Schenkel 96 eingeschraubt werden, um den Körper 39 fest auf dem Träger 88 zu halten.

Der Halter 90 entspricht in seiner Form und Funktion dem Träger 88; allerdings ist anstatt der Bohrung 50 eine Bohrung 98 mit einem Durchmesser vorgesehen, der kleiner ist als der der Bohrung 50, der aber etwas größer ist als der Außendurchmesser des Aufnahmeteils 46 im Bereich seines gewindelosen Abschnitts 62. Aufgrund dieser Abmessungen kann der Halter 90 auf den Körper 39 aufgesetzt werden, wobei er an der Schulter 56 zur Anlage kommt und um den Aufnahmeteil 42 schwenken kann. Um die Reibkräfte beim Schwenkvorgang so gering wie möglich zu halten, könnte eine Schmiervorrichtung vorgesehen werden, die die Zufuhr von Schmiermittel zur Gleitfläche zwischen der Oberfläche des Aufnahmeteils 42 im Bereich des gewindelosen Abschnitts 62 und der inneren Mantelfläche der Bohrung 98 ermöglicht. Im zusammengebauten Zustand ist also der Halter 90 gegenüber dem Träger 88 schwenkbeweglich. Der Halter 90 kann mittels Bolzen mit einem als Oberlenker ausgebildeten Koppelglied 38 verbunden werden, wobei er sich bei angreifender Kraft stets radial zu der Mittenachse 40 des Meßglieds 34 ausrichtet. Damit der Halter 90 axial auf dem Aufnahmeteil 42 festliegt, wird entweder auf den Gewindeabschnitt 60 eine nicht gezeigte Mutter aufgedreht oder ein Stift durch eine in Figur 6 angedeutete Querbohrung im Bereich des Gewindeabschnitts 60 gesteckt.

Figur 6 zeigt sehr deutlich, daß die Längsmittenachsen der Bohrungen 50 und 94 und die Mittenachse 40 des Körpers 39 auf einer Geraden liegen, und daß der Halter 90 mit Bezug auf den Träger 88 auf dem Kopf stehend angeordnet ist.

Das Verfahren zum Regeln der an dem Zuggerät 10 angreifenden Kraft, die über das oder mehrere Koppelglieder 28 auf ein oder mehrere Meßglieder 34 übertragen wird und dieses oder diese in Abhängigkeit von der Größe der Kraft elastisch deformiert, läuft dann derart ab, daß in dem Meßglied 34 an dem Geberglied 72 eine Schwingung oder ein Magnetfeld aufgebaut wird, daß die Deformation des Meßgliedes 34 und somit des Gebergliedes 72 über eine Änderung der Frequenz der Schwingung oder des Magnetfelds ermittelt wird, und daß ein dieser Änderung entsprechendes Signal an den Regelkreis gegeben wird. In dem Regelkreis wird ein Signal gebildet, das dem Ventil zur Verstellung des Hydraulikzylinders zugeführt wird, um das oder die Koppelglieder 28 derart zu verstellen, daß eine Änderung der Größe der angreifenden Kraft stattfindet.

## Patentansprüche

1. Meßvorrichtung zum Messen einer von einem Koppelglied (28) auf ein Zuggerät (10) übertragenen Kraft
mit einem Körper (39), der
a) einenends mit dem Koppelglied (28) verbunden,
b) anderenends ortsfest angebracht,
c) in Abhängigkeit von der Größe der Kraft elastisch deformierbar, und
mit einem Geberglied (72), das
d) im Bereich der Angriffsfläche des Koppelglieds (28) mit dem Körper (39) verbunden ist und
e) sich im übrigen berührungslos innerhalb des Körpers (39) erstreckt,
mit einem Nehmerglied (76), und mit einem Regelkreis zum Ändern der Größe der Kraft, dadurch gekennzeichnet, daß
f) der Körper (39) in einer sich in der Hauptangriffsrichtung der Kraft erstreckenden Biegeebene biegeweicher ausgebildet ist als in benachbarten, insbesondere senkrecht dazu verlaufenden Biegeebenen, und
g) das Nehmerglied (76) als Hall-Sensor ausgebildet ist und dem elektrischen Erfassen einer Auslenkung des Geberglieds (72) dient.

2. Meßvorrichtung nach Anspruch 1, dadurch gekennzeichnet, daß der Körper (39) einenends mit dem Nehmerglied (76) versehen ist.

3. Meßvorrichtung nach Anspruch 2, dadurch gekennzeichnet, daß bei Zwei Körpern (39) jeder Körper (39) mit einem Nehmerglied (76) und mit einem Geberglied (72) versehen ist.

4. Meßvorrichtung nach Anspruch 2 oder 3, dadurch gekennzeichnet, daß an dem freien Ende des Gebergliedes (72) ein Magnet (78) für das im Endbereich des Körpers (39) gelegene und als Hall-Sensor ausgebildete Nehmerglied (76) angebracht ist.

5. Meßvorrichtung nach Anspruch 1, dadurch gekennzeichnet, daß bei zwei Körpern (39) ein einziges Geberglied (72) und ein einziges Nehmerglied (76) vorgesehen sind, wobei das Geberglied (72) beidenends in jeweils einem Körper (39) befestigt ist, während das Nehmerglied (76) zur Erfassung der maximalen Auslenkung des Gebergliedes (72) zwischen beiden Körpern (39) vorgesehen ist.

6. Meßvorrichtung nach Anspruch 5, dadurch gekennzeichnet, daß das Geberglied (72) als Saite ausgebildet ist.

7. Meßvorrichtung nach Anspruch 6, dadurch gekennzeichnet, daß das Geberglied (72) in einen Schwingungszustand mit einer vorbestimmbaren Frequenz bringbar ist.

8. Meßvorrichtung nach Anspruch 5 oder 6, dadurch gekennzeichnet, daß das Nehmerglied (76) in einem vorbestimmbaren Abstand zu dem Geberglied (72) angeordnet ist und zu einer Erfassung des Abstandes zwischen dem Geberglied (72) und dem Nehmerglied (76) ausgebildet ist.

9. Meßvorrichtung nach einem oder mehreren der vorherigen Ansprüche, dadurch gekennzeichnet, daß der Körper (39) zur mittelbaren oder unmittelbaren Verbindung mit einem als Oberlenker und/oder einem als Unterlenker ausgebildeten Koppelglied (28, 38) einer Dreipunktgerätekupplung ausgebildet ist.

10. Meßvorrichtung nach einem oder mehreren der vorherigen Ansprüche, dadurch gekennzeichnet, daß der Körper (39) mit einem Aufnahmeteil (46) für die schwenkbewegliche Aufnahme eines Koppelglieds (28, 38) versehen ist.

## Claims

1. Measuring device for measuring a force transmitted by a coupling link (28) to a towing appliance (10)
with a body (39), which
a) is connected at one end to the coupling link (28),
b) is stationarily attached at the other end,
c) is elastically deformable in dependence on the magnitude of the force, and
with a transmitting member (72), which
d) is connected to the body (39) in the region of the working surface of the coupling link (28), and
e) otherwise extends without contact inside the body (39),
with a receiving member (76), and with a regulating circuit for altering the magnitude of the force, characterised in that
f) the body (39) is more flexible in design in a plane of bending extending in the direction of the main direction of application of the force, than in adjacent planes of bending, particularly extending vertically thereto, and
g) the receiving member (76) is in the form of a Hall sensor, and serves to detect electrically any deviation of the transmitting member (72).

2. Measuring device according to Claim 1, characterised in that the body (39) is provided at one end with the receiving member (76).

3. Measuring device according to Claim 2, characterised in that, when there are two bodies (39), each body (39) is provided with one receiving member (76) and with one transmitting member (72).

4. Measuring device according to Claim 2 or 3, characterised in that there is attached to the free end of the transmitting member (72) a magnet (78) for the receiving member (76) located in the end region of the body (39) and designed as a Hall sensor.

5. Measuring device according to Claim 1, characterised in that, when there are two bodies (39), one single transmitting member (72) and one single receiving member (76) are provided, the transmitting member (72) being attached at both ends in one body (39) in each case, while the receiving member (76) for detecting the maximum deviation of the transmitting member (72) is provided between both members (39).

6. Measuring device according to Claim 5, characterised in that the transmitting member (72) is designed as a cord.

7. Measuring device according to Claim 6, characterised in that the transmitting member (72) can be brought into a vibrating condition at a predeterminable frequency.

8. Measuring device according to Claim 5 or 6, characterised in that the receiving member (76) is disposed at a predetermined distance from the transmitting member (72), and is designed to detect the distance between the transmitting member (72) and the receiving member (76).

9. Measuring device according to one or more of the preceding Claims, characterised in that the body (39) is designed for indirect or direct connection with a coupling link (28, 38) designed as an upper or as a lower guide rod of a three-point implement linkage.

10. Measuring device according to one of more of the preceding Claims, characterised in that the body (39) is provided with a take-up part (46) for receiving in swingable fashion a coupling link (28, 38).

## Revendications

1. Dispositif de mesure pour mesurer une force transmise par un organe d'accouplement (28) sur un engin tracteur (10),
avec un corps (39), qui
a) est assemblé à une extrémité à l'organe d'accouplement (28),
b) est monté fixement à l'autre extrémité,
c) peut être déformé élastiquement en fonction de la valeur de la force, et
avec un organe transmetteur (72), qui
d) est assemblé au corps (39) dans la région de la face d'attaque de l'organe d'accouplement (28) et
e) s'étend au reste sans contact à l'intérieur du corps (39),
avec un organe récepteur (76), et avec un circuit de réglage pour modifier la valeur de la force, **caractérisé** en ce que
f) le corps (39) est réalisé plus souple en flexion dans un plan de flexion s'étendant dans la direction d'attaque principale de la force que dans des plans de flexion voisins, notamment s'étendant perpendiculairement à ce plan, et en ce que
g) l'organe récepteur (76) est réalisé sous forme de détecteur à effet Hall et sert à l'enregistrement électrique d'une déviation de l'organe transmetteur (72).

2. Dispositif de mesure selon la revendication 1, caractérisé en ce que le corps (39) est pourvu à une extrémité de l'organe récepteur (76).

3. Dispositif de mesure selon la revendication 2, caractérisé en ce qu'en présence de deux corps (39), chaque corps (39) est pourvu d'un organe récepteur (76) et d'un organe transmetteur (72).

4. Dispositif de mesure selon la revendication 2 ou 3, caractérisé en ce qu'un aimant (78), pour l'organe récepteur (76) situé dans la région terminale du corps (39) et réalisé sous forme de détecteur à effet Hall, est installé à l'extrémité libre de l'organe transmetteur (72).

5. Dispositif de mesure selon la revendication 1, caractérisé en ce qu'en présence de deux corps (39), un seul organe transmetteur (72) et un seul organe récepteur (76) sont prévus, l'organe transmetteur (72) étant fixé à chaque extrémité dans un corps (39) respectif, tandis que l'organe récepteur (76) est prévu entre les deux corps (39) afin d'enregistrer la déviation maximale de l'organe transmetteur (72).

6. Dispositif de mesure selon la revendication 5, caractérisé en ce que l'organe transmetteur (72) est réalisé sous forme de corde.

7. Dispositif de mesure selon la revendication 6, caractérisé en ce que l'organe transmetteur (72) peut être amené dans un état de vibration à une fréquence prédéterminable.

8. Dispositif de mesure selon la revendication 5 ou 6, caractérisé en ce que l'organe récepteur (76) est disposé à une distance prédéterminable de l'organe transmetteur (72) et est conçu en vue d'un enregistrement de la distance entre l'organe transmetteur (72) et l'organe récepteur (76).

9. Dispositif de mesure selon l'une ou plusieurs des revendications précédentes, caractérisé en ce que le corps (39) est conçu pour être assemblé directement ou indirectement à un organe d'accouplement (28, 38), réalisé sous forme de bras oscillant supérieur et/ou de bras oscillant inférieur, d'un accouplement d'équipement en trois points.

10. Dispositif de mesure selon l'une ou plusieurs des revendications précédentes, caractérisé en ce que le corps (39) est pourvu d'une partie réceptrice (46) pour recevoir à pivotement un organe d'accouplement (28, 38).
